# EUROPEAN PATENT APPLICATION

(11) **EP 0 628 277 A1**
(43) Date of publication of application: **14.12.1994**
(21) Application number: 94108448.5
(22) Date of filing: 01.06.1994
(51) Int. Cl.: A47J 47/14, B60N 3/16, B60H 1/00

(54) **Food-warming arrangement for a food-delivery motorized vehicle**

(30) Priority: 03.06.1993 AR 32509293
(71) Applicant: Rial, Jose Antonio, Vicente Lopez, Pcia de Buenos Aires (AR)
(72) Inventor: Rial, Jose Antonio, Vicente Lopez, Pcia de Buenos Aires (AR)
(74) Representative: Pedder, James Cuthbert

(57) **Abstract**

A food-warming arrangement for maintaining the food at a desired temperature for consuming, in a food-delivery motorized vehicle (1) having a box (3) for carrying the food and an engine cooling system (4), the arrangement comprising an isolating case (10) with a heat exchanger (24) therein, the hot coolant coming from the engine is circulated trough the heat exchanger (24) by a food-heating circuit and at least one fan (25) is provided to remove heat from the heat exchanger (24) and spread it within the case so as to be capable of keeping a desired temperature within the case, the food-heating circuit being connected to the engine cooling system (4).

## Description

### BACKROUND OF THE INVENTION

### 1. Field of the Invention

The present invention relates to the maintenance of food and meals in warm conditions for consuming purposes, and particularly refers to a food-warming arrangement for keeping the food at a desired temperature in a food-delivering motorized vehicle, the arrangement taking profit of the heat contained in the coolant circulating within a cooling system of an engine of the vehicle.

### 2. Description of the Prior Art

It is well known for any person that an internal combustion engine generates high temperatures as a result of the explosion of the fuel within the combustion chamber. To keep the temperatures at reasonable levels in the engine block, it is neccessary to remove part of such a heat which removal is made by circulating a coolant through a cooling system generally comprising a cooling circuit, a heat exchanger, and pumping means for circulating the coolant through the circuit and the exchanger. Part of the cooling circuit is formed within the engine block for removing heat therefrom, particularly from an upper portion thereof where the cylinders are located.

A part of this energy in the form of heat is conveyed in the exhaust gas and exhausted through the exhaust pipe and another part, the most important one, is conveyed in the coolant, generally cooling water, and lost into the environment through the heat exchanger. In all circumstances the heat is lost and no saving thereof is made.

Few attempts to save the heat energy have been done, for example by taking profit thereof in a heater for heating the car cockpit. Another application to save the heat energy has been the fact of preheating the fuel at the inlet to the carburetor by taking heat either from the cooling water or from the exhaust combustion gas. No application has been made, however, of the engine cooling system in a heating arrangement for heating the goods which are carried in a motorized vehicle, perticularly food or meals which are being delivered for immediate consuming purposes.

### 3.Summary of the Invention

It is an object of the invention to save the energy in the form of heat usually lost from a combustion engine of a vehicle and take profit of it by means of a food-warming arrangement for maintaining food at a desired temperature, for consuming or eating purposes, in a box of a food-delivering motorized vehicle such as the body of a car, truck or wagon.

It is another object of the present invention to provide a food-warming arrangement for keeping the food such as any kind of meals, pizza, and the like at a desired temperature in a food-delivering motorized vehicle, by taking profit of the heat generated by combustion engine means of the vehicle, the vehicle having a food-carrying box and an engine-cooling system comprising a cooling circuit containing a coolant, at least one heat exchanger, and pumping means for circulating the coolant through the circuit and through the exchanger, the arrangement comprising at least one isolating case defining an isolating warm chamber with supporting means within thereof for accommodating the food, heat exchanging means being provided within said case, fan means being mounted adjacent said heat exchanging means for removing heat from the heat exchanging means and spreading the heat within the chamber, for keeping said desired temperature in the chamber, a food heating circuit extending between the engine means of the vehicle and the case for circulating said coolant from a hot-coolant outlet of the engine means, through the heat exchanging means within the case and into the engine cooling system upstream a coolant inlet in the engine means.

It is still another object of the invention to provide a food-warming arrangement for keeping the food at a desired temperature in a food-delivering motorized vehicle, comprising an isolating case with heat exchanging means and fan means, and control means being provided for turning off the fan means upon the temperature within the case or in the heat exchanging means reaches a predetermined threshold above said desired temperature.

It is still an additional object of the invention to provide a food-delivering vehicle having a food-carrying box and combustion engine means, an engine-cooling system being provided for refrigerating the engine means, the cooling system comprising a cooling circuit containing a coolant, at least one heat exchanger, and pumping means for circulating the coolant through the cooling circuit and through the exchanger, the vehicle including a food-warming arrangement for maintaining the food at a desired eating temperature by taking profit of the heat generated by the combustion engine means, the food-warming arrangement comprising at least one isolating case mounted within said box, the case defining an isolating warm chamber with supporting means within thereof for accommodating the food, heat exchanging means being provided within said case, fan means being mounted adjacent said heat exchanging means for removing heat from the heat exchanging means and spreading the heat within the chamber, for keeping said desired temperature in the chamber, and a food heating circuit being provided for circulating said coolant from a hot-coolant outlet of the engine means, through the heat exchanging means within the case and into the engine cooling system upstream a coolant inlet in the engine means.

The above and other objects, features and advantages of this invention will be better understood when taken in connection with the accompanying drawings and description.

### BRIEF DESCRIPTION OF THE DRAWINGS

The present invention is illustrated by way of example in the following drawings wherein:
FIG. 1 schematically shows an elevational view of a preferred embodiment of the food-warming arrangement of the present invention, applied to a food-delivery vehicle such as a little truck;
FIG. 2 is a schematic plant view of the embodiment of FIGURE 1; and
FIG. 3 is a partial sectional view of the case of the invention.

### DESCRIPTION OF THE PREFERRED EMBODIMENTS

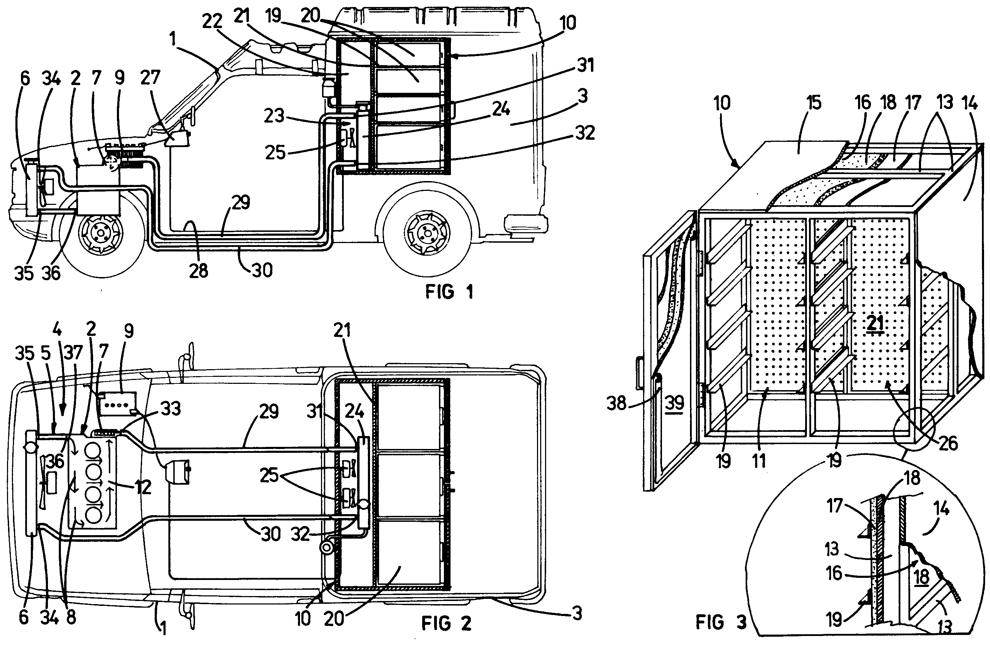

As may be seen from Figs. 1 and 2 a food-delivering vehicle according to the invention comprises a little truck 1 having combustion engine means such as a conventional internal combustion engine 2, an electrical accumulator 9 and a box 3 for transporting goods, particularly meals or food for delivery. The engine means are refrigerated by an engine cooling system 4 including a cooling circuit 5, a heat exchanger 6 and pumping means 7 comprising for example a rotary water pump. Circuit 5 comprises hoses or any appropriate conduits outside a block 12 of engine 2. Within block 12, circuit 5 follows along inner conduits, not illustrated, schematically indicated by arrows 8. Circuit 5 contains a coolant, such as water, circulating along the circuit for removing heat generated in combustion chambers of engine 2. In conventional cooling systems the coolant is cooled by circulating it through heat exchanger 6 wherein the conveyed heat is lost to the environment helped by a fan.

In accordance with the present invention the heat generated by engine 2 and carried by the coolant is saved by an arrangement comprising an isolating case 10 located in the box or body 3 of truck 1. Case 10, shown in Fig. 3, comprises a frame 13 made of square section metal tubes and walls 14, each wall being formed with an outer metal plate 15 fixed exteriorly to frame 13. An inner plate 18 having fixed thereto a plastic foam, such as a poliurethane foam 17 is fixed to an inner side of frame 13, so that an air chamber 16 being defined between outer plate 15 and poliurethane foam 18.

A warm chamber 11 is defined between walls 14 and a foraminous plate 21 including a plurality of holes 26 the size of which appears enlarged in the drawings for clarity purposes. Plate 21 separates chamber 11 from a compartment 22 adapted for mounting of food-heating means 23.

Supporting means comprising a plurality of guiding L-profile bars 19 are fixed to frame 13 within chamber 11 so that a plurality of food carrying trays or food containing boxes 20 may be accommodated in chamber 11 for safe transportation.

Case 10 has preferably a pair of doors 39 only one of which is illustrated, each door being configurated, like walls 14, with an outer plate 15, an air chamber 16, a foam 17 and an inner plate 18. In addition, each door includes weather strips 38 for keeping chamber 11 isolated when they are closed onto case 10.

Heat exchanging means 23 comprises a heating exchanger or heat radiator 24 for circulation of the coolant from the engine cooling system. At least one fan 25, but preferably two ones, is mounted adjacent radiator 24 to move the air within case 10 through radiator 24 so as to remove the heat of the radiator and spread this heat as uniformly as possible within chamber 11 by passing the heated air through holes 26 of plate 21. The heat exchanger 24 and fan 25 are capable of maintaining a desired temperature of about 90°C within chamber 11.

Radiator 24 is connected to the engine cooling system by a food heating circuit formed by conduits like tubes or hoses 29, 30. Heat radiator 24 has an inlet 31 for hot coolant coming through the inlet conduit 29 from an outlet 33 in the engine. Preferably outlet 33 for hot coolant coincides with the outlet of pump 7. Once the coolant has transferred the conveyed heat to chamber 11, through exchanger 24, the coolant continues circulating through outlet 32, along conduit 30 and enters the engine cooling system through an inlet 34 of engine heat exchanger 6. Once cooled in exchanger 6, the cold coolant exits outlet 35, flows along conduit 36 and enters engine inlet 37 at a bottom of block 12 to reinitiate the cooling cicle.

In a preferred manner, fans 25 remain in operation while the desired temperature is maintained within chamber 11 and are connected to control means 27 adjusted to turn off fans 25 upon a temperature threshold is reached, for example 95°C. This threshold value may be measured either within chamber 11, directly in the coolant circulating through radiator 24, or at the outlet 32 in the food heating circuit by appropiate detectors, not shown. The signal generated by the conventional detectors may be fed to control means 27 preferably located at the control panel of the vehicle.

Control means 27 may comprise any conventional switch which, upon the receipt of a signal corresponding to the threshold level interrupts the electrical feeding from accumulator 9 to fans 25 to turn off the same until the temperature decreases below the threshold wherein the operation of fans 25 is restablished. These control means with electrical circuits and other electrical components, like switches, etc, are well known and no additional refence thereto is necessary.

While a preferred embodiment of the present invention has been illustrated and described, it will be obvious to those skilled in the art that various changes and modifications may be made therein without departing from the scope of the invention as defined in the appended claims.

## Claims

1. A food-warming arrangement for keeping the food at a desired temperature in a food-delivering motorized vehicle, by taking profit of the heat generated by combustion engine means of the vehicle, the vehicle having a food-carrying box and an engine-cooling system comprising a cooling circuit containing a coolant, at least one heat exchanger, and pumping means for circulating the coolant through the circuit and through the exchanger, the arrangement comprising:
at least one isolating case defining an isolating warm chamber with supporting means within thereof for accommodating the food;
heat exchanging means within said case;
fan means adjacent said heat exchanging means for removing heat from the heat exchanging means and spreading the heat within the chamber, for keeping said desired temperature in the chamber;
a food heating circuit for circulating said coolant from a hot-coolant outlet of the engine means, through the heat exchanging means within the case and back into the engine cooling system upstream a coolant inlet in the engine means.

2. The food-warming arrangement of claim 1, wherein control means are provided for turning off the fan means upon the temperature in the heat exchanging means reaches a predetermined threshold above said desired temperature.

3. The food-warming arrangement of claim 2, wherein the case comprises a frame and walls fixed thereto, the walls defining the isolating warm chamber, each wall comprising, from outside to inside the case, an outer plate, an air chamber and a plastic isolating foam fixed to an inner plate.

4. The food-warming arrangement of claim 3, wherein the supporting means comprise a plurality of guiding L- profile bars for supporting food trays, the bars being fixed to the frame.

5. The food-warming arrangement of claim 3, wherein the case has at least one door defining an access to the warm chamber, the door having wheather strips to keep the chamber isolated when closed.

6. The food-warming arrangement of claim 1, wherein the heat exchanging means comprise a heat radiator.

7. The food warming arrangement of claim 1, wherein the case comprises a heating-means-carrying compartment adjacent said warm chamber and separated thereof by a foraminous plate extending across the case.

8. The food warming arrangement of claim 6, wherein the heat radiator has an inlet and an outlet, the inlet being connected to the coolant outlet of the engine means and the radiator outlet supplies the coolant to an inlet of the engine heat exchanger, the engine heat exchanger having a cold-coolant outlet connected to a coolant inlet in said engine means.

9. The food warming arrangement of claim 8, wherein the pumping means of the engine cooling system is connected between the engine outlet and the heat radiator inlet.

10. A food-delivering vehicle having a food-carrying box and combustion engine means, an engine-cooling system being provided for refrigerating the engine means, the cooling system comprising a cooling circuit containing a coolant, at least one heat exchanger, and pumping means for circulating the coolant through the cooling circuit and through the exchanger, the vehicle including a food-warming arrangement for maintaining the food at a desired eating temperature by taking profit of the heat generated by the combustion engine means, the food-warming arrangement comprising:
at least one isolating case mounted within said box, the case defining an isolating warm chamber with supporting means within thereof for accommodating the food;
heat exchanging means within said case;
fan means adjacent said heat exchanging means for removing heat from the heat exchanging means and spreading the heat within the chamber, for keeping said desired temperature in the chamber;
a food heating circuit for circulating said coolant from a hot-coolant outlet of the engine means, through the heat exchanging means within the case and back into the engine cooling system upstream a coolant inlet in the engine means.
